# EUROPÄISCHE PATENTSCHRIFT

(11) **EP 3 274 621 B1**
(45) Veröffentlichungstag und Bekanntmachung des Hinweises auf die Patenterteilung: **04.09.2019**
(21) Anmeldenummer: 15817067.0
(22) Anmeldetag: 10.12.2015
(51) Int. Cl.: F21S 8/06, E04B 9/04, F21V 8/00

(54) **LICHTLEITKÖRPER MIT SPRITZGUSSMATTE UND LICHTKANÄLEN**
LIGHT GUIDE BODY COMPRISING AN INJECTION-MOULDED MAT AND LIGHT CHANNELS
CORPS GUIDE D'ONDES OPTIQUES AVEC TAPIS MOULÉ PAR INJECTION ET CANAUX LUMINEUX

(30) Priorität: 25.03.2015 DE 202015002273 U
(43) Veröffentlichungstag der Anmeldung: 31.01.2018
(73) Patentinhaber: Christandl, Dieter, 8160 Weiz (AT); Christandl, Josef, 8181 St. Ruprecht/Raab (AT); Hofer, Robert, 8181 St. Ruprecht an der Raab (AT)
(72) Erfinder: Christandl, Dieter, 8160 Weiz (AT); Christandl, Josef, 8181 St. Ruprecht/Raab (AT); Hofer, Robert, 8181 St. Ruprecht an der Raab (AT)
(74) Vertreter: Riebling, Peter
(86) Internationale Anmeldenummer: PCT/EP2015/002491
(87) Internationale Veröffentlichungsnummer: WO 2016/150454

(56) Entgegenhaltungen:
- US-A1- 2014 059 952
- US-A1- 2014 286 039

## Beschreibung

Gegenstand der Erfindung ist eine Spritzgussmatte, die nachfolgend auch als Lichtleitermatte bezeichnet ist, welche zur Einbettung in eine aushärtbare Gießmasse geeignet ist, um so einen hochbelastbaren Lichtleitkörper zu bilden. Ferner betrifft die Erfindung einen Lichtleitkörper, der aus einer ausgehärteten Gießmasse besteht, in welche die Spritzgussmatte eingebettet ist..

Ein aus einer aushärtbaren Gießmasse bestehender Lichtleitkörper ist beispielsweise mit dem Gegenstand der auf die gleichen Anmelder zurückgehenden WO 2012/097975 A1 bekannt geworden. Ebenso ist aus dieser Druckschrift eine zur Einbettung in den Lichtleitkörper geeignete Spritzgussmatte bekannt geworden. Auf die dortige Offenbarung wird Bezug genommen. Diese Offenbarung ist vollinhaltlich Gegenstand der vorliegenden Offenbarung.

In der genannten Druckschrift ist eine Spritzgussmatte beschrieben, bei der offen blieb, in welcher Form die Lichterzeugung erfolgte. Mittlerweile hat sich herausgestellt, dass es entscheidend ist, mit relativ geringer Energie einen hohen Lichteintrag in einer Spritzgussmatte zu erreichen, um mit geringem Stromverbrauch einen möglichst hell leuchtenden Lichtleitkörper zu erhalten der in eine Gießmasse z.B. in der Form eines Betonkörpers eingebettet ist.

Die US 2014/286039 A1 offenbart eine Lichtleitermatte nach dem Oberbegriff des Patentanspruchs 1, welche für die Herstellung eines quaderförmigen Lichtleitkörpers geeignet ist, die in einer Gussform angeordnet und mit einer gießfähigen, aushärtbaren Gießmasse ausgießbar ist. Die Lichtleiterplatte besteht aus einem lichtleitenden Kunststoff, an welche Lichtleitelemente aus einem mindestens teilweise lichtleitenden Kunststoff angeformt sind, deren eine Stirnseite als lichtabgebende Flächen an der Oberseite des Lichtleitkörpers ausgebildet sind. Die Längsstege der Lichtleitermatte sind als Lichtkanäle zur Aufnahme von punktförmigen, lichterzeugenden Elementen ausgebildet, wobei die Lichtkanäle an der bodennahen Seite der Lichtleitelemente angeformt sind.

Der Erfindung liegt die Aufgabe zugrunde, eine Lichtleitermatte nach dem Oberbegriff des unabhängigen Patentanspruches 1 so weiterzubilden, dass mit niedriger elektrischer Energie ein hoher Leuchteindruck erzielbar ist.

Zur Lösung der gestellten Aufgabe ist eine, bevorzugt aus einem lichtleitenden Kunststoff bestehende Lichtleitermatte durch die Merkmale des Anspruches 1 gekennzeichnet.

Die in die Gießmasse eingebettete Lichtleitermatte bildet demnach an einer oder mehreren sichtbaren Oberflächen des Lichtleitkörpers sichtbare und leuchtende Lichtelemente aus. Diese Lichtelemente sind Teil der Lichtleitermatte und bringen das in oder an der Lichtleitermatte erzeugte Licht durch Lichtleitung zu einer oder mehreren Sichtseiten des Lichtleitkörpers.

Es wurde erkannt, dass nur eine punktförmige Lichtquelle, wie z. B. LED-Elemente, für einen günstigen Lichteintrag in die Lichtleitermatte dann geeignet sind, wenn jede punktförmige Lichtquelle passgenau an der Bodenseite des profilierten Lichtleiterelementes angeordnet ist, so dass ein konzentriertes Licht an oder auf die Bodenseite des Lichtleiterelementes erzeugt wird, welches damit besonders hell strahlt und nur geringe Streulichtverluste entstehen.

Unter dem Begriff "Lichtleiterelement" wird dabei jedes beliebige aus lichtleitendem Kunststoff bestehende Strukturelement an der Lichtleitermatte verstanden, das in der Lage ist, das an der Bodenseite dieses Lichtleiterelementes das durch punktförmige lichterzeugenden Elemente erzeugte Licht durch Lichtleitung im Kunststoffmaterial auf die gegenüber liegende Sichtseite des Lichtleitkörpers mit geringsten Streulichtverlusten zu transportieren.

Wenn in der folgenden Beschreibung eine Lagenzuordnung der einzelnen Elemente der Spitzgussmatte durch Verwendung von die Lage beschreibenden Begriffe wie "horizontal" oder "vertikal" erfolgt, so gilt dies für die Ausrichtung der Spritzgussmatte und des daraus hergestellten ausgehärteten Lichtleitkörpers in einer liegenden (horizontalen) Ebene. Alle Begriffe sind analog anzuwenden, wenn die Lage der Spritzgussmatte und des ausgehärteten Lichtleitkörpers in einer vertikalen Ebene ist.

Lediglich der einfacheren Beschreibung wegen wird deshalb von einer horizontal liegenden Spitzgussmatte ausgegangen, obwohl die Erfindung auf eine solche Lagenzuordnung nicht beschränkt ist.

In einer ersten bevorzugten Ausgestaltung ist es vorgesehen, dass mindestens die (horizontalen) Längsstäbe der Lichtleitermatte als Lichtkanäle zur Aufnahme und Halterung dieser lichterzeugenden Elemente ausgebildet sind, wobei diese Lichtkanäle gleichzeitig mindestens als Längsstege der Lichtleitermatte ausgebildet sind.

Damit wird Kunststoffmaterial bei der Herstellung der Lichtleitermatte im Kunststoffspritzgussverfahren gespart, denn die gitterförmig ausgebildete Lichtleitermatte, die bevorzugt als Spritzgussmatte ausgebildet ist, verwendet sich gitterartig kreuzende Längs- und Querstege.

Wenn nun die Längsstege erfindungsgemäß als Lichtleitkanäle ausgebildet sind, übernehmen sie eine Doppelfunktion. Einmal bilden sie die Versteifungsstege des Gitterwerkes, weil sie gleichwohl noch als Längsstege funktionieren und andererseits dienen sie als (Licht leitende) Lichtkanäle, weil sie geeignet sind, die Licht erzeugenden, punktförmigen Elemente aufzunehmen und zu halten und das dort erzeugte Licht an die umgebenden Elemente weiter zu leiten.

Durch diese Zuordnung einer Doppelfunktion, dass die Längsstege gleichzeitig auch als Lichtkanäle ausgebildet sind, wird die mechanische Stabilität der Lichtleitermatte aufrechterhalten, und gleichzeitig werden den Längsstegen eine zusätzliche - Licht aufnehmende - Funktion zugeordnet.

Dies war im Stand der Technik bisher nicht bekannt.

Selbstverständlich ist die Erfindung nicht darauf beschränkt, lediglich die (horizontalen) Längsstege eines (ebenen horizontalen) Gitterwerkes einer Spritzgussmatte als Lichtkanäle auszubilden. In einer anderen Ausgestaltung der Erfindung kann es vorgesehen sein, dass auch die hierzu quer verlaufenden (horizontalen) Querstege der Lichtleitermatte als Lichtkanäle ausgebildet sind.

Lediglich der einfacheren Beschreibung wegen wird in der folgenden Beschreibung von der erst genannten Ausführungsform ausgegangen, weil hier lediglich die Längsstege als Lichtkanäle ausgebildet sind, obwohl sich die Erfindung auch auf die Doppelfunktion bezieht, nämlich dass die Längs- und die Querstege oder nur die Querstege als Lichtkanäle ausgebildet sind.

In einer bevorzugten Ausgestaltung der Erfindung ist es vorgesehen, dass die in den Kreuzungspunkten des Gitterwerkes angeordneten (vertikalen) Lichtleitelemente etwa quader- oder rechteckförmig ausgebildet sind. Es handelt sich also um relativ dünne Kunststoffplättchen, die so ausgebildet sind, dass an deren Bodenseite der Lichtkanal angeformt ist und die gegenüberliegende Stirnseite des jeweiligen Lichtleitelementes die Licht abgebende, sichtseitige Fläche des Lichtleitkörpers bildet. Die Lichtleiterelemente dienen somit zur Lichtleitung in vertikaler Richtung durch den ausgehärteten Lichtleiterblock hindurch.

Anstatt der Verwendung von punktförmigen Lichtquellen, die vor allem als elektrisch miteinander verbundene, kettenförmige LED-Elemente ausgebildet sind, können auch andere Licht erzeugende Elemente verwendet werden, wie z. B. Lichtröhren, bei denen keine punktförmige Lichterzeugung jeweils im Kreuzungspunkt der Längs- und Querstege erfolgt, sondern eine sich über die gesamte Länge des Lichtkanals erzeugende, gleichmäßige Lichtverteilung. Solche Elemente werden auch als Lichtbalken gezeichnet und können z. B. Glühlampen in der Art von Sofitten sein oder auch Leuchtstofflampen oder Plasma-Leuchtkörper oder Fluoreszenz- oder Lumineszenz-Leuchtelemente, die als aktive Leuchtelemente mit einer geeigneten Stromversorgung zum Leuchten gebracht werden. Natürlich sind auch passive Fluoreszenz- oder Lumineszenz-Leuchtelemente vom Erfindungsgegenstand der Erfindung umfasst.

Im Vordergrund der vorliegenden Erfindung steht jedoch die Ausbildung der punktförmigen Lichtquellen im Kreuzungspunkt der Längs- und Querstege, in welchen Kreuzungspunkten jeweils der untere Teil eines Lichtleitelementes angeformt ist, welches mit seiner oberen Sichtseite an der Oberseite des Lichtleitkörpers sichtbar ist und dort sichtbares Licht abgibt.

In einer bevorzugten Ausgestaltung der Erfindung besteht der erfindungsgemäße Lichtkanal aus einem zur Bodenseite der Lichtleitermatte hin halboffenes Längsprofil, welches somit die Längsstege der Lichtleitermatte ausbildet und in dem die Licht erzeugenden, bevorzugt punktförmigen, Elemente befestigt sind.

In einer bevorzugten Ausgestaltung der Erfindung ist es vorgesehen, dass die punktförmigen Lichtelemente, die bevorzugt als LED-Elemente ausgebildet sind, lösbar im Lichtkanal positioniert sind. Hier wird vorgeschlagen, dass die LED-Elemente in der Art einer Kette hintereinander liegend auf einer Montageschiene befestigt sind, die auswechselbar im Lichtkanal gehalten ist. Die kettenförmig im gegenseitigen Abstand hintereinander liegenden LED-Elemente können dabei in einem bandförmigen, biegbaren Kunststoffstreifen eingebettet sein. Dieser ist bevorzugt transparent ausgebildet.

Die im bandförmigen Kunststoffstreifen eingebetteten LED-Elemente können z. B. auf dem Basisschenkel einer U-förmig profilierten Montageschiene aufgeklebt werden, und diese Montageschiene wird dann auswechselbar im Lichtkanal befestigt.

Die Befestigung der die LED-Elemente tragenden Montageschiene kann auf verschiedene Arten erfolgen:
- In einer ersten Ausführungsform ist die Montageschiene lösbar und auswechselbar im Lichtkanal eingeklipst.
- In einer anderen Ausgestaltung kann die Montageschiene in den Lichtkanal eingepresst, eingeklebt oder in einer anderen Weise dauerhaft und nicht auswechselbar befestigt werden.
- In einer dritten Ausgestaltung kann der bandförmige Kunststoffstreifen, der bevorzugt lichtleitend und transparent ausgebildet sein unmittelbar ohne Verwendung einer Montageschiene in den Lichtkanal eingeklipst, eingeklebt, eingeklemmt oder in anderer Weise lösbar im Lichtkanal angeordnet sein.

In einer Weiterbildung der Erfindung ist es vorgesehen, dass die bevorzugt als Spritzgussmatte ausgebildete Lichtleitermatte randseitig verlängerte Haltestäbe trägt, wobei diese Haltestäbe als Verlängerung der Querstäbe ausgebildet sind.

Die seitlich angeordneten Haltestäbe dienen als Niederhalteflächen für in der Gussform angeordnete Niederhaltestempel, die auf den Hältestäben aufsitzen und so die Lichtleitermatte in der Gussform gegen Aufschwimmen beim Eingießen der Gießmatte schützen.

Ein quader- oder blockförmiger Lichtleitkörper, der aus einer ausgehärteten Gießmasse besteht, zeichnet sich dadurch aus, dass die Lichterzeugung durch kettenförmig miteinander verbundene LED-Elemente dergestalt erfolgt, dass die LED-Elemente an der Bodenseite des Lichtleitkörpers befestigt werden, und zwar in Lichtkanälen, die an der Lichtleitermatte angeformt sind und die von der Bodenseite des Lichtleitkörpers zugänglich sind.

Diese Lichtkanäle bilden - nach dem Gegenstand des unabhängigen Anspruches 1 - die Längsstege der in dem Lichtleitkörper eingebetteten Lichtleitermatte.

Damit ist es erstmals möglich, die Licht erzeugenden LED-Elemente an der Bodenseite eines fertig hergestellten und ausgehärteten Lichtleitkörpers auszutauschen, weil nach dem Entformen in der Gießform die Bodenseite freikommt. Während des Gießvorganges wurden die Lichtleitkanäle der eingebetteten Lichtleitermatte mit Platz haltenden Profilen ausgefüllt, die nach dem Aushärten des Lichtleitkörpers entfernt werden, so dass in den nun freien Lichtkanälen die kettenförmig miteinander verbundenen LED-Elemente selbst oder die Montageschienen, welche die LED-Elemente tragen oder die Kunststoffstreifen, in denen die LED-Elemente eingebettet sind, eingebracht werden können.

Die Einbringung erfolgt - wie oben stehend beschrieben - entweder in Form einer Montageschiene, die lösbar oder unlösbar in den nun offenen Lichtleitkanälen befestigbar ist oder in Form eines die LEDs tragenden Kunststoffstreifens.

In einer anderen Ausgestaltung des Neuerungsgegenstandes ist es vorgesehen, dass in der Bodenseite des Lichtleitkörpers eine sich über mehrere Gitterpunkte erstreckende Ausnehmung eingearbeitet ist, in der ein oder mehrere Bodennuten eingearbeitet sind, so dass in der Bodenseite des Lichtleitkörpers eine die Höhe des Lichtleitkörpers vermindernde, großflächige Ausnehmung oder einzelne Nuten eingearbeitet sind, in welchen nun Licht erzeugende Elemente befestigt werden können.

In einer ersten Ausgestaltung dieser Ausführung ist es vorgesehen, dass als Licht erzeugendes Element eine sogenannte Lichtplatte verwendet wird, die aus einem durchsichtigen, lichtleitenden Kunststoffmaterial besteht, in der eine Vielzahl von rasterförmig angeordneten LED-Elementen angeordnet sind. Es handelt sich demnach um eine Lichtplatte in der die Leuchtelemente matrixartig verteilt angeordnet sind.

Diese Lichtleitplatte wird als Ganzes an der Bodenseite des Lichtleitkörpers angeklipst und erzeugt aufgrund der im Rastermaß der Lichtleitkörper angeordneten LED-Elemente passgenau an den Gitterpunkten der Lichtleitermatte und den dort angeordneten Lichtleitelementen ein punktförmiges Licht, welches von diesen zur Sichtseite des Lichtleitkörpers weitergegeben wird.

Demnach sieht diese zweite Ausführungsform vor, dass anstatt der Ausbildung von einzelnen nutenförmigen, halboffenen Lichtkanälen, in denen punktförmige LED-Elemente kettenförmig angeordnet sind und passgenau den darüber angeordneten Lichtleiterelementen zugeordnet sind, nunmehr eine größere Fläche an der Bodenseite des ausgehärteten Lichtleitkörpers freigemacht wird, so dass alle Gitterpunkte der Lichtleitermatte in diese Bodenseite münden und auf diese Bodenseite nunmehr eine größere, möglichst die gesamte Bodenseite bedeckende, Licht erzeugende Lichtplatte angeklipst oder angeklemmt oder in anderer Weise lösbar oder nicht lösbar befestigt werden kann.

Selbstverständlich ist es in einer Weiterbildung möglich, dass die Fläche der Lichtleiterplatte größer ist als vergleichsweise die Fläche der Bodenseite des Lichtleitkörpers, so dass sich eine solche Lichtplatte auch über die Bodenseiten von mehreren neben- und/oder hintereinander liegenden Lichtleitkörpern erstrecken kann.

Der Erfindungsgegenstand der vorliegenden Erfindung ergibt sich nicht nur aus dem Gegenstand der einzelnen Schutzansprüche, sondern auch aus der Kombination der einzelnen Patentansprüche untereinander.

Alle in den Unterlagen, einschließlich der Zusammenfassung offenbarten Angaben und Merkmale, insbesondere die in den Zeichnungen dargestellte räumliche Ausbildung, werden als erfindungswesentlich beansprucht, soweit sie einzeln oder in Kombination gegenüber dem Stand der Technik neu sind.

Im Folgenden wird die Erfindung anhand von lediglich einen Ausführungsweg darstellenden Zeichnungen näher erläutert. Hierbei gehen aus den Zeichnungen und ihrer Beschreibung weitere erfindungswesentliche Merkmale und Vorteile der Erfindung hervor.

Soweit einzelne Gegenstände als "erfindungswesentlich" oder "wichtig" bezeichnet sind, bedeutet dies nicht, dass diese Gegenstände notwendigerweise den Gegenstand eines unabhängigen Anspruches bilden müssen. Dies wird allein durch die jeweils geltende Fassung des unabhängigen Patentanspruches bestimmt.

Es zeigen:
Figur 1: Draufsicht auf eine Lichtleitermatte nach der Erfindung
Figur 2: Schnitt gemäß der Linie A-A in Figur 1
Figur 3: Schnitt gemäß der Linie B-B in Figur 1
Figur 4: Schnitt gemäß der Linie C-C in Figur 1
Figur 5: Schnitt gemäß der Linie D-D in Figur 1
Figur 6: vergrößertes Detail 1 aus Figur 3
Figur 7: vergrößertes Detail 2 aus Figur 5
Figur 8: perspektivisch eine erste Ausführungsform einer Lichtleitermatte mit befestigten Licht abgebenden Elementen
Figur 9: das Detail nach Figur 6 mit eingebautem Licht erzeugenden Element in der Art eines Lichtbalkens
Figur 10: die Draufsicht auf die Montageschiene nach Figur 9
Figur 11: die Stirnansicht der Montageschiene nach Figur 10
Figur 12: die Draufsicht auf einen Lichtleitkörper, der z. B. als Betonkörper ausgebildet ist
Figur 13: Schnitt gemäß der Linie A-A in Figur 12
Figur 14: Schnitt gemäß der Linie B-B in Figur 12
Figur 15: Schnitt gemäß Linie C-C in Fig. 12
Figur 16: Schnitt gemäß Linie D-D in Figur 12
Figur 17: eine im Vergleich zur Figur 16 abgewandelte Ausführung
Figur 18: eine Abwandlung der Figur 1 mit weiteren Einzelheiten
Figur 19: ein Einbaubeispiel für einen Lichtleitkörper in der Belagsoberfläche einer Strasse
Figur 20: ein Lichtleitkörper mit einer Gießmasse aus Beton in der Vorderansicht gemäß Figur 19
Figur 21: der Lichtleitkörper nach Figur 19 und 20 in der Rückansicht
Figur 22: ein weiteres Anwendungsbeispiel mit zwei gegeneinander gestellten Lichtleitkörpern nach Figur 19-21 in auseinander gezogener Darstellung
Figur 23: das Anwendungsbeispiel nach Figur 22 in zusammen gesetztem Zustand
Figur 24: ein Lichtleitkörper nach dem Ausführungsbeispiel ähnlich der Figur 19-21 in der Ausführung als bewehrte Deckenplatte
Figur 25: ein Schnitt durch die Ausführung nach Figur 24 mit Darstellung der Abhängung der Deckenplatte von einer Rohdecke

Soweit in den Zeichnungen Zahlen eingetragen sind, die nicht einem Bezugsstrich zugeordnet sind, sondern jeweils zwischen 2 Pfeilen stehen, handelt es sich um beispielhafte Dimensionsangaben in der Einheit Millimeter. Die angegebenen Dimensionen sollen als Ausführungsbeispiel die bevorzugten Dimensionen des Lichtleitkörpers und dessen Bestandteile erläutern, ohne den Schutzbereich der Erfindung zu beschränken.

Die Zeichnungen zeigen eine Lichtleitermatte 1, die aus einem Gitterwerk von sich kreuzenden Längs- und Querstegen 2, 3 besteht. Das Gitterwerk besteht bevorzugt aus einem lichtleitenden Kunststoff und ist vorzugsweise im Kunststoffspritzgiessverfahren hergestellt.

Die Längs- und Querstege 2, 3 kreuzen sich bevorzugt in einem Winkel von 90°. Es ist jedoch auch jeder andere Kreuzungswinkel möglich und wird als schutzwürdig beansprucht.

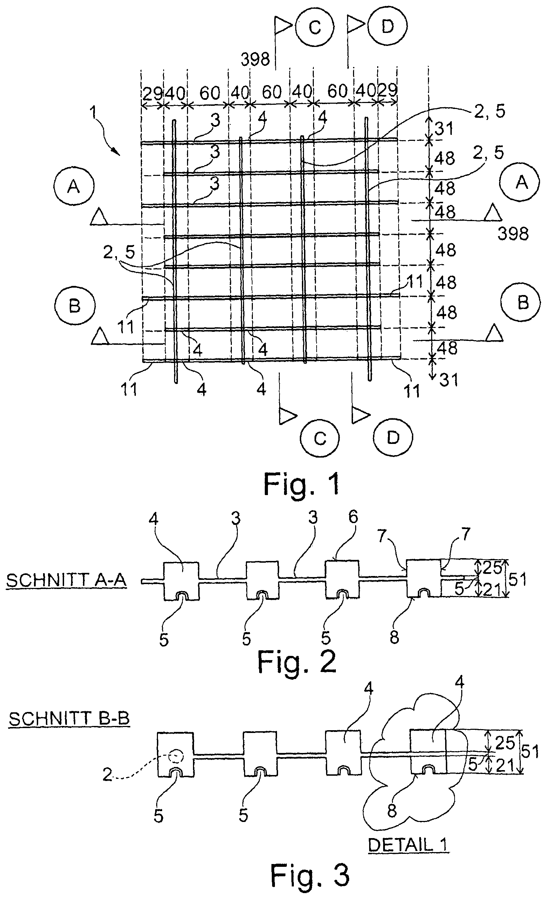

Der einfacheren Beschreibung wegen wird jedoch das Zeichnungsbeispiel nach Figur 1 näher beschrieben, bei dem sich die Längs- und Querstege 2, 3 im rechten Winkel zueinander kreuzen.

Die Längs- und Querstege 2, 3 bestehen bevorzugt aus einem Licht leitenden Kunststoffmaterial, wie z. B. einem PMMA, einem Polyacryl oder einem anderen geeigneten Licht leitenden Kunststoffmaterial.

Die Querstege 3 bilden gemäß Figur 2 und 3 etwa mittige Verbindungen zu Lichtleitelementen 4, die ebenfalls aus einem Licht leitenden Kunststoff hergestellt sind. Es wird bevorzugt, wenn alle Kunststoffelemente der Lichtleitermatte 1 aus dem gleichen Licht leitenden Kunststoff hergestellt sind, obwohl die Erfindung nicht darauf beschränkt ist.

Im gezeigten Ausführungsbeispiel sind die Lichtleitelemente 4 rechteckförmige oder quadratische Plättchen, die eine Dicke von z. B. 4 mm und eine Höhe von 51 mm aufweisen. Die Höhe entspricht etwa der Höhe eines später hergestellten Lichtleiterblocks, in den die Lichtleitermatte 1 eingebettet ist.

Die besagten Querstege 32 schließen werkstoffeinstückig jeweils etwa im Mittenbereich an die in gleicher Ebene sich fortsetzenden Lichtleitelemente 4 an.

In einer anderen Ausgestaltung kann es vorgesehen sein, dass sich die Querstege 3 an die Bodenseite des jeweiligen Lichtleitelementes 4 Licht leitend und werkstoffeinstückig anschließen.

Eine bevorzugte Länge der zwischen den an die Lichtleitelemente 4 anschließenden Querstege 3 ist bevorzugt 60 mm.

Eine solche Lichtleitermatte nach Figur 1 kann beispielsweise in Querrichtung 400 mm Breite und in Richtung der Längsstege 2 ebenfalls eine Breite von 400 mm aufweisen.

Über den Außenumfang der Lichtleitermatte 1 stehen in regelmäßigen Abständen Haltestäbe 11 vor, die den rasterförmigen Profilkanal 10 der Lichtleitermatte 1 jeweils randseitig überragen, um beim Einlegen der Lichtleitermatte 1 in eine nach oben offene Gießform Niederhalteflächen zu schaffen. Es werden nicht näher dargestellte Stempel verwendet, die niederhaltend auf den jeweils seitlich nach außen verlängert ausgeführten Haltestäben 11 aufsetzen und ein Aufschwimmen der Lichtleitermatte 1 beim Eingießen der Giessmasse in die Gießform vermeiden.

Wichtig ist nun, dass die Lichtleitelemente 4 direkt Licht leitend mit den die Lichtleitelemente 4 kreuzenden Lichtkanälen 5 verbunden sind. Diese Lichtkanäle 5 sind bevorzugt werkstoffeinstückig an die Lichtleitelemente 4 bodenseitig angespritzt und bilden so die Längsstege 2.

Erfindungsgemäß sind mindestens die Längsstege (2) der Lichtleitermatte (1) als Lichtkanäle (5) zur Aufnahme von punktförmigen, lichterzeugenden Elementen ausgebildet, wobei die Lichtkanäle (5) an der bodennahen Seite der Lichtleitelemente (4) angeformt sind.

Der Begriff "Lichtkanäle 5" bedeutet, dass es sich um halboffenen Profilkanäle 10 in der Vergußmasse 24 handelt, in welche ein lichterzeugender Lichtbalken 12 bevorzugt lösbar eingeklipst ist. Unter dem Begriff "Lichtbalken" wird jeder lichterzeugende streifen- oder bandförmiges Element verstanden, das in verschiedenen Ausgestaltungen ausführlich im allgemeinen Beschreibungsteil umschrieben wurde.

In das Profil der Lichtkanäle 5 ragen die lichtaufnehmenden Stirnseiten der aus einem lichtleitenden Kunststoff (bevorzugt PMMA) bestehenden Lichtleiterelemente 4 hinein, die somit das Licht von den lichterzeugenden Lichtbalken 12 aufnehmen und durch die Vergußmasse 24 hindurch zur Ober- und Außenseite des (Beton-)Lichtleitkörpers 21 leiten. Weil die Seitenwände der Lichtkanäle bogenförmig (z.B. halbkreisförmig) sind, sind die lichtaufnehmenden Stirnseiten der Lichtleiterelemente ebenfalls bogenförmig ausgebildet und fluchten etwa mit den Seitenwänden der Lichtkanäle. Durch die bogenförmige Ausbildung der lichtaufnehmenden Stirnseiten der Lichtleiterelemente 4 wird eine besonders große lichtaufnehmende Fläche geschaffen und der Wirkungsgrad des Lichteintrags auf dieser großen Fläche des Lichtleiterelements ist damit optimiert.

In gestrichelten Linien ist in Figur 3 jedoch auch noch eingezeichnet, dass parallel und im vertikalen Abstand zu den unteren Lichtkanälen 5 noch zusätzliche Längsstege 2 vorhanden sein können, die etwa mittig an dem jeweiligen Lichtleitelement 4 in Figur 3 anschließen und werkstoffeinstückig mit diesem verbunden sind.

Dies ist jedoch nur eine abgewandelte Ausführungsform, wobei die bevorzugte Ausführungsform darin besteht, dass die Längsstege 2 durch die Lichtkanäle 5 selbst gebildet sind.

In diesem Fall sind die Lichtkanäle gemäß Figur 2, 3 und 6 als bogenförmige, etwa halbrunde, nach unten geöffnete Profilkanäle 10 ausgebildet, in denen eine geeignete Licht erzeugende Einrichtung verankert wird.

Durch die Lichterzeugung im Lichtkanal 5 wird somit das Licht durch das Lichtelement 4 nach oben geleitet und verlässt dort die Licht abgebende Stirnseite 6 des Lichtleitelementes 4, wobei die Licht abgebende Stirnseite 6 aus der aushärtenden Füllmasse eines Lichtleitkörpers 21 herausragt oder mit dieser bündig ist und so das Licht sichtbar an der Oberseite des Lichtleitkörpers 21 nach oben abgibt.

Die Lichtleitelemente 4 sind etwa rechteckförmig oder quadratisch ausgebildet und deren Seitenflächen 7 sind etwa senkrecht zu der Licht abgebenden Stirnseite 6 ausgerichtet. Hierauf ist die Erfindung nicht beschränkt. Es kann jede beliebige Profilform des Lichtleitelementes 4 verwendet werden, wobei z. B. auch die Seitenflächen 7 bombiert, halbrund, mehreckig oder dergleichen ausgebildet sind.

Ebenso ist es nicht lösungsnotwendig, dass die Lichtleitelemente 4 einen rechteckförmigen Querschnitt aufweisen. Sie können auch halbrund, bombiert, als runde oder halbrunde Lichtstäbe oder dergleichen ausgebildet sein.

Die Bodenseite 8 der Lichtleitelemente 4 ist bevorzugt gerade ausgebildet und steht senkrecht zur Seitenfläche 7 des jeweiligen Lichtleitelementes 4.

Es wird später noch ausgeführt werden, dass die Bodenseite 8 mit dem in diesem Bereich angeformten Lichtkanal 5 entweder auf der Rückseite des Lichtleitkörpers 21 sichtbar sein kann oder vollkommen in die Bodenseite des Lichtleitkörpers 21 eingebettet sein kann.

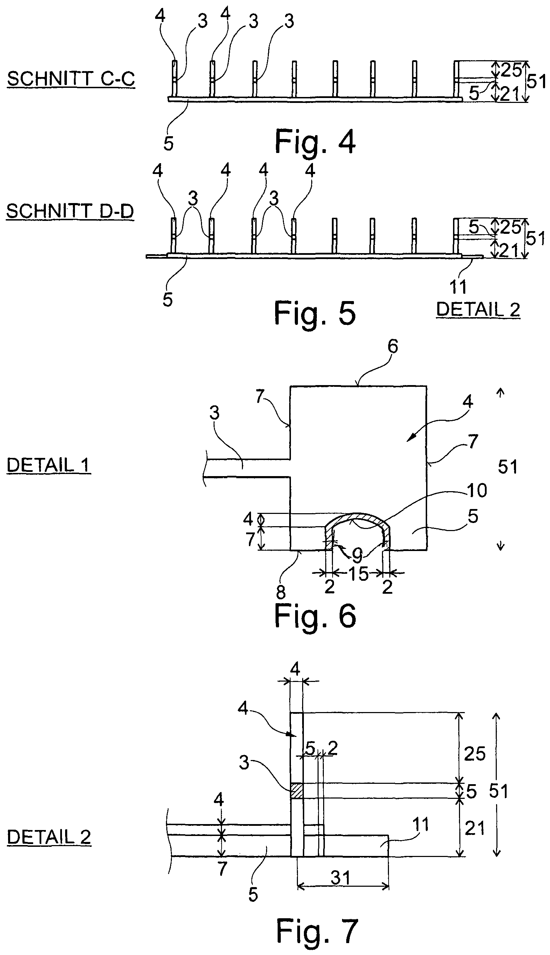

In einer bevorzugten Ausgestaltung der Erfindung ist gemäß Figur 6 vorgesehen, dass den Profilkanal 10 an der Bodenseite 8 des Lichtleitelementes 4 etwa halbrundförmig ausgebildet ist und zum Beispiel als Dachkantprofil ausgebildet ist. Der als Längssteg 2 ausgebildete Lichtkanal 5 hat bevorzugt eine Dicke von 2 mm und die lichte Weite des Lichtkanals kann etwa 15 mm betragen.

Die Höhe der geraden Wand des Profils 10 liegt bei etwa 7 mm, und die Höhe des abgerundeten Profils liegt bei etwa 4 mm. Insgesamt hat somit der Lichtkanal 5 eine Gesamthöhe von bevorzugt 12 mm.

An der Innenseite des Profils 10 sind einander gegenüberliegende und zueinander fluchtende Rastnocken 9 angeordnet.

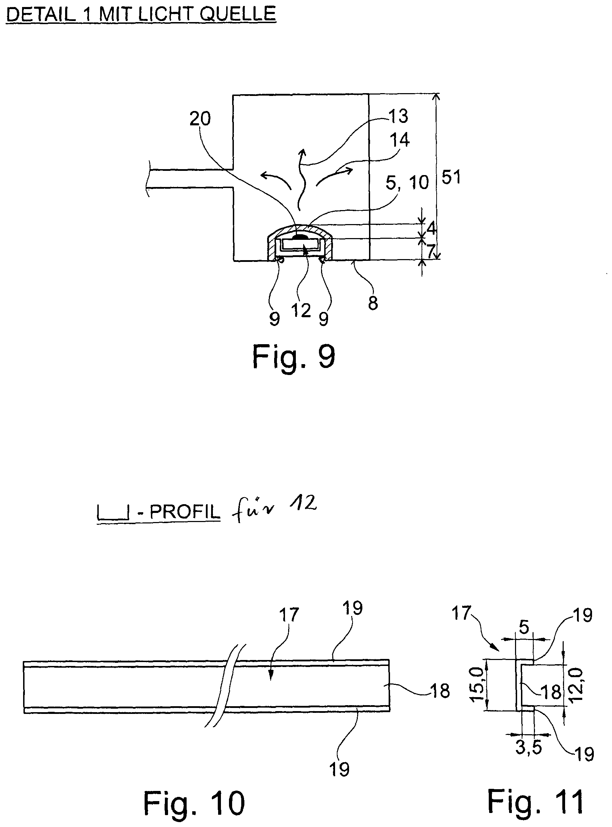

Gemäß Figur 9 wird eine Montageschiene 17 in den Innenraum des Profils 10 des Lichtkanals 5 eingeklipst, die etwa u-förmig profiliert ist. Diese Montageschiene 17 weist einen Basisschenkel 18 auf, an dem die Seitenschenkel 19 angeformt sind. Eine bevorzugte Größe für die Innenseite des Basisschenkels 18 ist etwa 12 mm, und die Höhe der Seitenschenkel 19 wird mit etwa 3,5 mm angegeben, so dass sich eine Gesamthöhe der Montageschiene 17 von 5 mm ergibt.

Gemäß Figur 9 werden in den Innenraum der Montageschiene 17 die Licht abgebenden Elemente in Form einer LED-Kette eingebracht. Die LEDs sind somit in Serie geschaltet und liegen an einer gemeinsamen Stromquelle. Es kann z. B. eine Anzahl von 8 LEDs auf einer Länge von 400 mm verteilt werden, und die LED-Kette wird in das U-Profil der Montageschiene 17 eingelegt und dort festgeklebt oder geklemmt.

Nachdem die Montageschiene 17 mit den LED-Elementen 20 belegt wurde, wird die so fertig gestellte Montageschiene 17 in der Art nach Figur 9 in den Profilkanal 10 des Lichtleitkanals 5 eingeklipst oder eingeklemmt.

Die Rastnocken 9 halten die Montageschiene 17 vor dem Herausfallen geschützt.

Auf diese Weise ist die Montageschiene 17 leicht auswechselbar im Lichtkanal 5 gehalten.

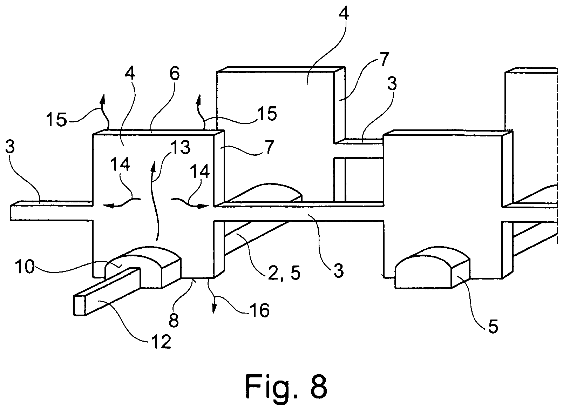

Die Figur 8 zeigt eine fertig montierte Lichtleitermatte, aus der sich ergibt, dass aus der Montageschiene 17 mit darauf montierten LED-Elementen 20 ein Lichtbalken 12 geschaffen wird, der in den Profilkanal 10 des Lichtkanals 5 eingeklipst ist und dort lösbar gehalten ist.

Dementsprechend sendet der Lichtbalken 12 das Licht in Pfeilrichtung 13 in das Lichtleitelement 4 nach oben, und innerhalb des Lichtleitelementes 4 verteilt sich das Licht auch in den Pfeilrichtungen 14 seitlich in die daran anschließenden Licht-leitenden Querstege 3.

Ebenso leuchtet die untere Stirnfläche 8 des Lichtleitelementes 4 mit einer Lichtabgabe in Pfeilrichtung 16 nach unten.

Erfindungsgemäß ist vorgesehen, dass das jeweilige LED-Element genau im Rastermaßstab des Abstandes der Lichtleitelemente hintereinander liegend im Lichtkanal 5 angeordnet ist. Dies bedeutet, dass konzentriert und fluchtend unter jedem Lichtleitelement im Lichtkanal passgenau ein LED-Element angeordnet ist, welches demnach einen konzentrierten Lichtstrahl auf das Lichtleitelement 4 einstrahlt und dieses konzentrisch beleuchtet. Streulichtverluste zur Seite hin werden dadurch minimiert.

Es ergibt sich damit ein sehr intensiver Leuchteindruck, der nicht durch StreulichtVerluste abgeschwächt ist.

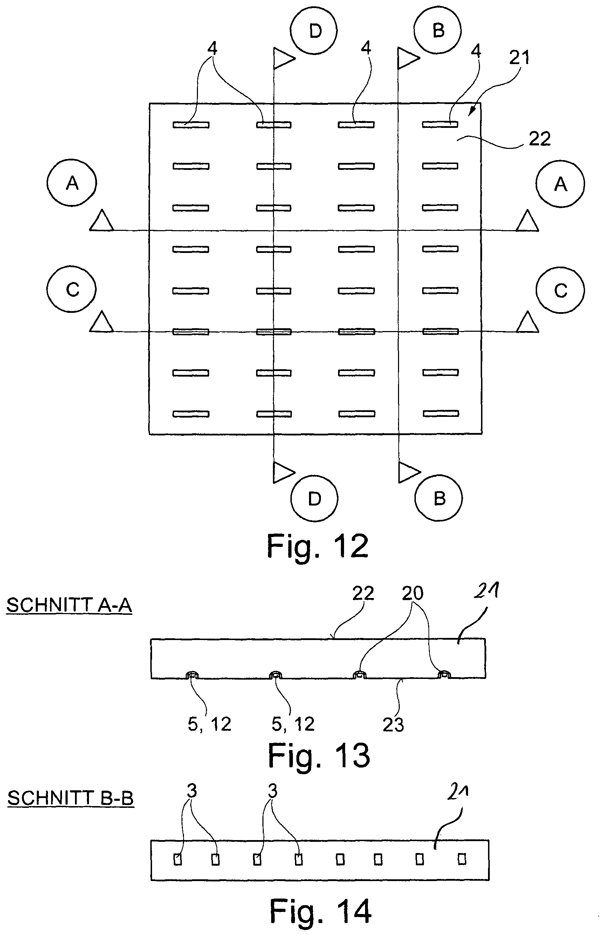

Figur 12 zeigt eine bevorzugte Ausgestaltung eines Lichtleitkörpers 21, der aus einem gießfähigen Material besteht, welches ausgehärtet ist und in dem die Lichtleitermatte 1 eingebettet ist.

An der Oberseite 22 des Lichtleitkörpers 21, der z. B. aus Beton, einem gießfähigen Kunststoff, einem Kunststoffverbundkörper oder dergleichen besteht, sind nur noch die Licht abgebenden Stirnseiten 6 der Lichtleitelemente 4 sichtbar und geben konzentriert das Licht im Rastermaßstab der verlegten Lichtleitelemente 4 nach oben hin ab.

Selbstverständlich ist es nicht notwendig, dass die Lichtleitelemente 4 im Rastermaßstab verlegt sind. Es kann jede beliebige Formgebung zur Lichterzeugung an der Oberseite 22 des Lichtleitkörpers 21 verwendet werden. Sie können somit auch graphische oder numerische oder alphanumerische Symbole und Zeichen bilden.

Die Bodenseite 23 des ausgehärteten Lichtleitkörpers 21 ist bevorzugt nach unten geöffnet, so dass die nach unten gerichteten offenen Lichtkanäle 5 auch noch nach der Fertigstellung des Lichtleitkörpers 21 zugänglich sind. Es kann demnach auch nach Fertigstellung des Lichtleitkörpers 21 jederzeit die aus dem Lichtbalken 12 bestehende Montageschiene 17 mit den darauf angeordneten LED-Elementen 20 ausgewechselt werden.

Eine bevorzugte Höhe eines solchen Lichtleitkörpers 21 beträgt beispielsweise 51 mm, und es wird ein Rastermaß von 400 x 400 mm bevorzugt.

Die Figur 14 zeigt, dass die Querstege 3 in dem Material des Lichtleitkörpers 21 eingegossen sind.

Wie bereits ausgeführt, kann die Gießmasse 24 aus einem beliebigen gießfähigen und aushärtbaren Material bestehen.

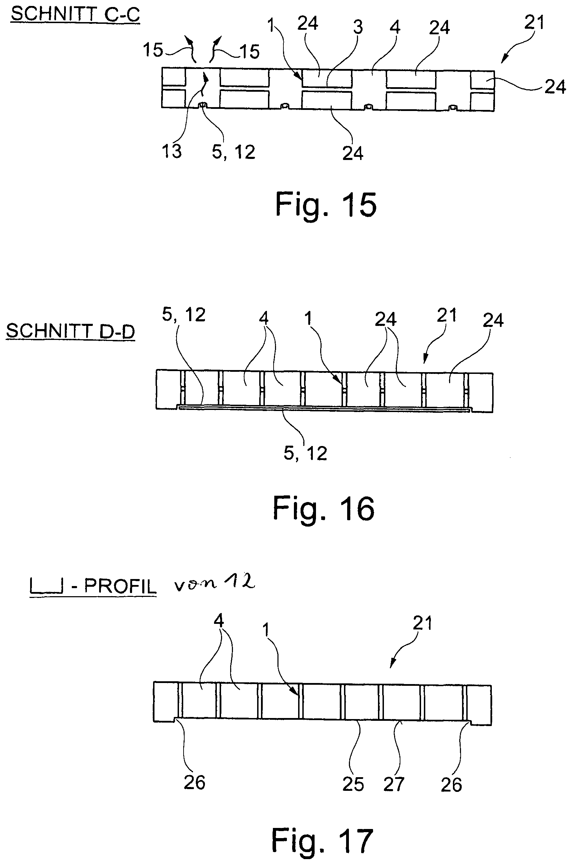

Die Figur 15 zeigt einen Schnitt gemäß der Linie C-C in Figur 12, wo erkennbar ist, dass die ausgehärtete Gießmasse 24 die Querstege 2 von oben und unten her einschließt und dass die Gießmasse 24 jeweils von den Lichtleitelementen 4 durchsetzt ist.

Auf diese Weise wird das Licht in Pfeilrichtung 15 durch das jeweilige Lichtleitelement 4 konzentriert nach oben hin abgegeben.

Die Figur 15 zeigt ferner, dass die Bodenseite des Lichtleitkörpers 21 nach unten hin im Bereich der Lichtkanäle 5 geöffnet ist.

Hierauf ist die Erfindung jedoch nicht beschränkt. Es kann auch vorgesehen sein, dass die Lichtkanäle 5 im Material des Lichtleitkörpers 21 eingeschlossen sind und die Bodenseite daher geschlossen ist.

Der Schnitt gemäß der Linie D-D in Figur 16 zeigt die Einbettung der Lichtleitelemente 4 im Rastermaßstab in der Gießmasse 24, und die Figur 17 zeigt als abgewandeltes Ausführungsbeispiel, dass in der Bodenseite 23 des Lichtleitkörpers 21 auch eine durchgehende Bodennut 25 vorhanden sein kann, die einander gegenüberliegende Hinterschneidungen 26 aufweist.

Auf diese Weise wird die Bodenfläche 27 der dort eingebetteten Lichtleitermatte 1 freigelegt, und die Licht aufnehmenden Bodenseiten 8 der im Rastermaßstab eingebetteten Lichtleitelemente 4 werden frei. In die so freigelegte Bodennut 25 kann nun eine Lichtleiterplatte eingeklipst werden, die aus kettenförmigen LED-Elementen besteht.

Die Lichtleiterplatte - nicht zeichnerisch dargestellt - ist somit ein großflächiges Licht abgebendes plattenförmiges Element, welches als Platte hinter die Hinterschneidungen 26 eingeklipst (gerastet) oder eingeklemmt wird und somit die gesamte Bodenfläche 27 mit den Licht aufnehmenden Bodenseiten 8 der Lichtleitelemente 4 bestrahlt.

Aufgrund der Einrastung in Hinterschneidungen 26 kann somit die Lichtleiterplatte jederzeit ausgewechselt werden.

Ebenso kann es vorgesehen sein, dass die Abmessungen der Lichtleiterplatte größer sind als die Abmessungen des Lichtleitkörpers 21 nach Figur 17, so dass die Lichtleiterplatte auch mehrere nebeneinander liegende Lichtleitkörper 21 bodenseitig abdecken kann, so dass eine einzige Lichtleiterplatte auch mehrere Lichtleitkörper 21, die nebeneinander liegen, mit Licht versorgen kann.

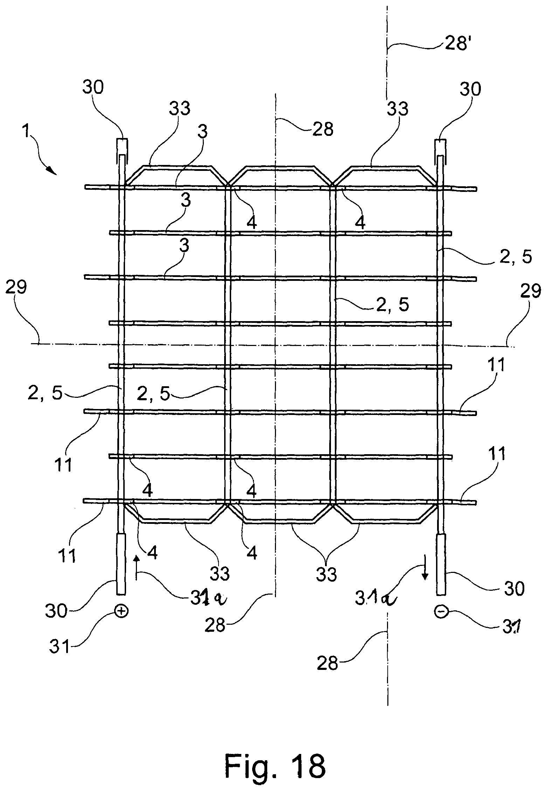

Die Figur 18 zeigt weitere Einzelheiten einer Lichtleitermatte 1 nach allen vorher beschriebenen Ausführungsbeispielen.

Es ist gezeigt, dass die Lichtleitermatte 1 entweder in symmetrische Teilstücke oder in asymmetrische Teilstücke aufgeteilt werden kann. Die in Figur 18 dargestellte Lichtleitermatte 1 kann deshalb entlang der vertikalen Teilungslinie 28 in zueinander symmetrische Teilstücke und ebenso entlang der horizontalen Teilen Sie den Teilungslinie 29 abgeteilt werden.

Wird statt der symmetrischen vertikalen Teilungslinie 28 eine asymmetrische Teilungslinie 28' gewählt, kann die Platte auch im Maßstab 30/40 geschnitten werden. Jeder Abschnitt hat dann das Maß 10/40 (cm).
Daraus folgen 2 weitere Platten mit 30/20 und aus dem Abschnitt folgen 2x10/20 modulare Abschnitte. Demnach ist die erfindungsgemäße Lichtleitermatte 1 durch die Angabe der hier angegebenen Teilungslinie nun 28, 28', 29 modular teilbar.

Die Figur 18 zeigt auch noch zusätzliche Kabelkanäle 32, die sich jeweils stirnseitig zwischen den Kreuzungspunkten der vertikalen und der horizontalen Längs- und Querstege 2, 3 ergeben.

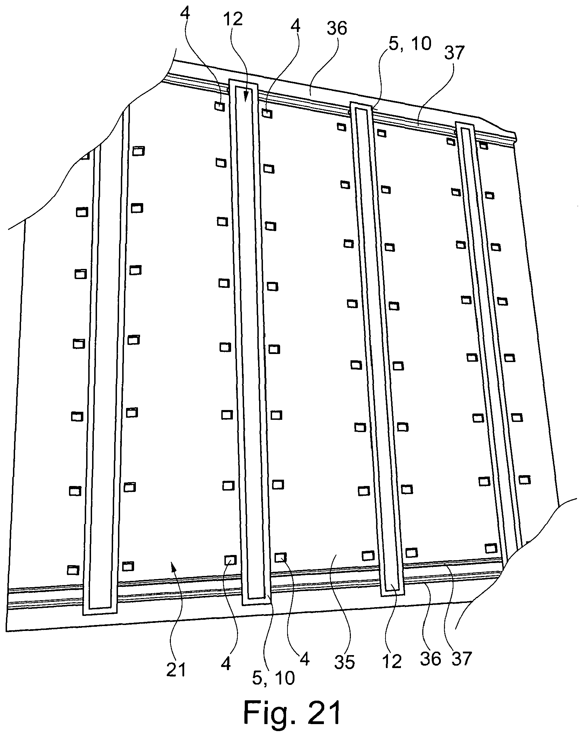

Über die eingezeichneten Stromzuführungen 30 wird ausgehend von einem Stromanschluss 31 der Strom über die in den Kabelkanälen 32 verlegten Stromkabel 37 (siehe Figur 21) eingeführt, um die an den Kreuzungspunkten angeordneten LED Elemente mit Strom zu versorgen. Die Stromrichtung 31 a ist lediglich beispielhaft eingetragen.

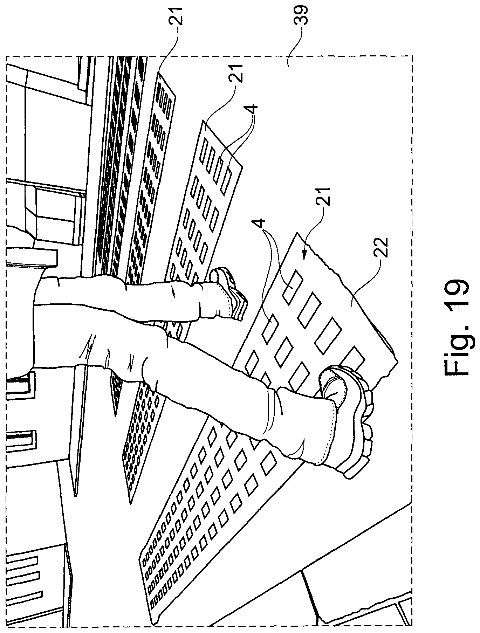

Die Figur 19 zeigt eine nach den vorangegangenen Ausführungsbeispielen hergestellten Beton-Lichtleitkörper 21, der in die Belagsoberfläche 33, beispielsweise einer Straße, bevorzugt flächenbündig eingebaut ist.

Im gezeigten Ausführungsbeispiel dienen die Beton-Lichtleitkörper 21 mit den nach oben gerichteten, Licht-abgebenden Lichtleiterelementen 4 als beleuchteter Zebrastreifen.

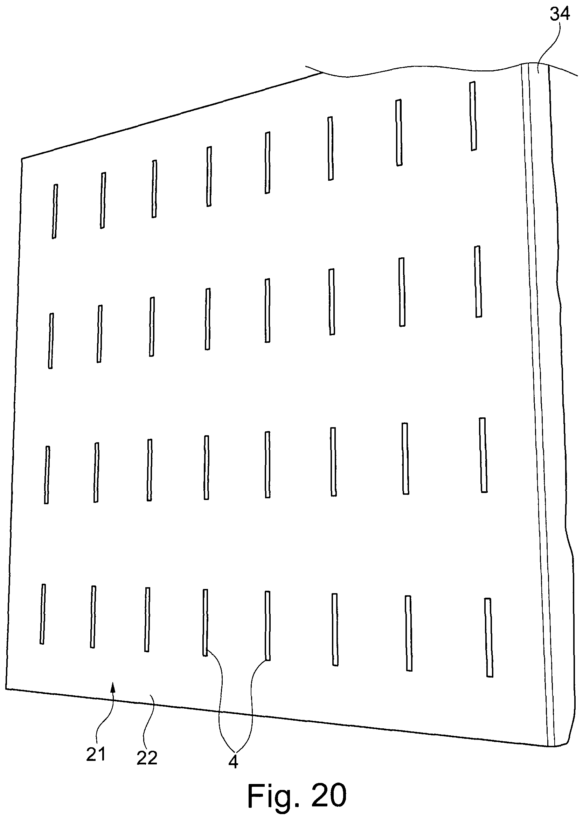

Die Figur 20 zeigt ein in Figur 19 dargestellten Beton-Lichtleitkörper 21 in Ansicht seiner Oberseite 22.

Es ist erkennbar, dass die Licht abgebenden Stirnseiten der Lichtleiterelemente 4 von der Oberseite 22 des Lichtleitkörpers 21 sichtbar sind und im beleuchteten Zustand - siehe Figur 19 - eine optisch beeindruckende Lichtgrafik bilden.

Lediglich beispielhaft ist in Figur 20 der rechteckförmige Betonkörper des Lichtleitkörpers dargestellt, von dem auch eine Stirnseite 34 sichtbar ist.

Die Figur 21 zeigt die Draufsicht auf die Rückseite des Beton-Lichtleitkörpers 21 nach Figur 20, und im Bereich der Rückseite 35 sind parallel und im gegenseitigen Abstand zueinander die Lichtkanäle 5 ausgebildet, die im Wesentlichen aus halb offenen Profilkanälen 10 bestehen, die zur Rückseite 35 hin geöffnet sind.

In das Profil der Profilkanäle 10 ragen die bogenförmigen und dem Profil der Nut angepassten und mit diesem Profil fluchtenden Licht-aufnehmenden Seiten der aus Kunststoff bestehenden Lichtleiterelemente 4 hinein und im gezeigten Ausführungsbeispiel wird der Profilkanal 10 durch Lichtbalken 12 abgedeckt.

Die Funktion und Ausführung der Lichtbalken 12 ist anhand der Figuren 6 und 9 erläutert worden.

Der Lichtbalken 12 besteht bevorzugt aus einer Kette von elektrisch miteinander verbundenen und einen gegenseitigen Abstand zueinander einnehmenden LED-Elementen 20, worauf die Erfindung jedoch nicht beschränkt ist.

Es können sämtliche bekannten Licht abgebenden Elemente als Lichtbalken 12 verwendet werden.

In der Draufsicht auf die Rückseite 35 des Lichtleitkörpers 21 ist noch erkennbar, dass an einer Seite des Lichtleitkörpers 21 ein die Profilkanäle 10 kreuzender Kabelkanal 36 angeordnet ist, in dem ein oder mehrere Stromkabel 37 für die Stromversorgung der in den Profilkanälen 10 eingerasteten Lichtbalken 12 angeordnet sind.

Die Erfindung ist nicht auf die Anordnung eines einzigen, die Profilkanäle 10 kreuzenden Kabelkanals 36 beschränkt. In der Figur 21 ist erkennbar, dass auch an der gegenüberliegenden Seite, parallel zu dem unteren Kabelkanal 36 ein weiterer Kabelkanal 36 angeordnet ist.

Die Stromversorgung der Lichtbalken 12 kann deshalb von der Seite des oberen oder von der Seite des unteren Kabelkanals 36 oder von beiden Seiten aus erfolgen.

Die Kabelkanäle 36 sind bevorzugt ebenfalls zur Rückseite 35 des Lichtleitkörpers 21 geöffnet und die dort befestigten Stromkabel 37 können leicht lösbar im Kabelkanal 36 angeordnet sein. Dies kann durch Kabelklemmen oder Clipse erfolgen.

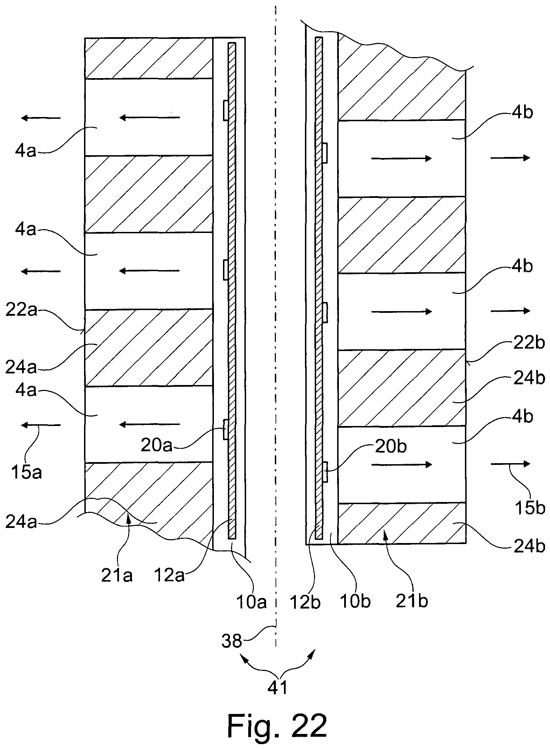

Die Figur 22 zeigt ein aus zwei Lichtleitkörpern 21 nach den Figuren 20 und 21 zusammengesetztes Doppelelement 41, wobei die beiden Lichtleitkörper mit dem Bezugszeichen 21a und 21b bezeichnet sind, weil sie genau identisch ausgebildet sind. Es gilt daher für jeden Lichtleitkörper 21a, 21b die vorhergehende Beschreibung für den Lichtleitkörper 21.

Im Ausführungsbeispiel ist noch schematisiert dargestellt, dass der Lichtbalken 12 aus einer Anzahl von parallel und im gegenseitigen Abstand zueinander angeordneten LED-Elementen 20a, 20b besteht.

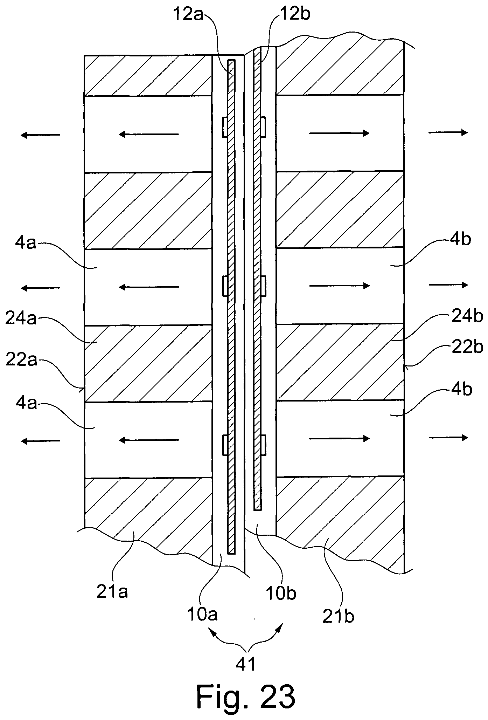

Die beiden Lichtleitkörper 21a, 21b sind entlang einer spiegelsymmetrischen Teilungsebene 38 mit ihren Bodenseiten einander gegenüberliegend angeordnet. Zur besseren zeichnerischen Verdeutlichung ist in Figur 22 eine auseinander gezogene Darstellung für das Doppelelement 41 gewählt, während für die Figur 23 die gleichen Verhältnisse gelten, wobei aber in dieser Figur die beiden Lichtleitkörper 21a, 21b mit ihren Bodenseiten einander berührend das funktions-und einbaufertige Doppelelement 41 bilden.

In einer anderen, nicht zeichnerisch dargestellten Ausführungsform kann es vorgesehen sein, dass lediglich ein einziger Lichtbalken 12 vorhanden ist, was nach Figur 23 bedeutet, dass der Lichtbalken 12a, 12b zu einem einzigen Lichtbalken vereinigt ist und die LED s der einen Seite nach links und die LED s der anderen Seite nach rechts in das jeweilige, Licht-aufnehmende Lichtleiterelement 4 einstrahlen.

Es ergibt sich somit eine Licht-abgebende Oberseite 22a an der linken Seite des Doppelelementes 41 als auch eine Licht-abgebende Rückseite des Doppelelementes 41 an der Oberseite 22b.

Ein solches Doppelelement 41 kann beispielsweise als eine nach beiden Seiten leuchtende Trennwand in einem Gebäude ausgebildet sein.

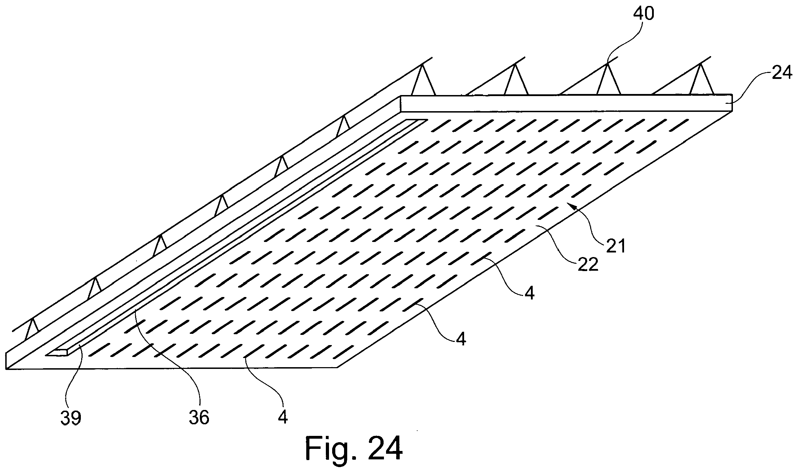

Die Figur 24 zeigt als weiteres Ausführungsbeispiel, dass der erfindungsgemäße Lichtleitkörper, der bevorzugt als Beton-Lichtleitkörper 21 ausgebildet ist, als selbsttragendes Deckenelement ausgebildet ist.

Es ist deshalb an seiner Rückseite mit einer Bewehrung 40 verbunden, die in an sich bekannter Weise aus Moniereisen besteht.

Die Bewehrung besteht im gezeigten Ausführungsbeispiel aus dreiecksförmigen, metallischen, rundprofilierten Drahtträgern, die in der Vergussmasse 24 des Lichtleitkörpers eingebettet sind und die an ihren Dreiecksspitzen jeweils durch Tragstäbe miteinander verbunden sind.

In einer solchen Deckenplatte können noch zusätzlich Kühl- oder Heizkanäle in der Vergussmasse 24 eingegossen sein und ein solches Deckenelement kann als selbsttragendes Deckenelement an der Baustelle mit Ortbeton vergossen werden, um seine endgültigen statischen Eigenschaften nach dem Verguss mit Ortbeton zu erhalten.

In einer anderen Ausgestaltung kann es jedoch auch vorgesehen sein, dass das in Figur 24 gezeigte Deckenelement bereits schon nach der Herstellung im Werk seine endgültigen statischen Eigenschaften erhält und es als selbsttragendes Deckenelement sofort am Ort der Baustelle in einen Deckenverbund - ohne Verguss mit Ortbeton - eingebaut werden kann.

Um die Stromkabel 37 zugänglich zu machen, ist es vorgesehen, dass ein zur Sichtseite (Oberseite 22) hin geöffneter Revisionsschacht 39 in den Beton-Lichtleitkörper 21 eingeformt ist, der gleichzeitig als Kabelkanal 36 für die Stromversorgung der Lichtbalken 12 dient.

Neben der Anordnung eines einzigen Revisionsschachtes 39 kann natürlich an jeder der beiden Längsseiten einer solchen Deckenplatte ein solcher Revisionsschacht 39 vorgesehen sein, in dem die Stromkabel 37 verlegt sind. Im Revisionsschacht können auch geeignete Stromerzeugungsmodule, wie z.B. Gleichstrom erzeugende Strommodule angeordnet sein.

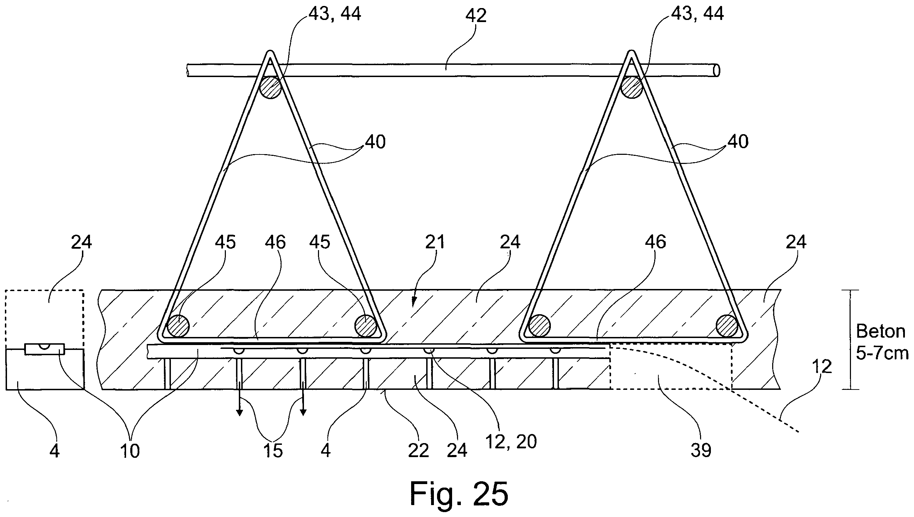

Die Figur 25 zeigt als weiteres Ausführungsbeispiel die Integration einer Deckenplatte nach Figur 24 an einer Rohdecke 42.

Die Bewehrung der Rohdecke besteht aus Tragstäben 43, und auf die Tragstäbe 43 der Rohdecke 42 ist die Bewehrung 40 der abgehängten Deckenplatte nach Figur 25 aufgehängt.

Die Tragstäbe 45 der deckenplattenseitigen Bewehrung 40 sind in der Vergussmasse 24 des Beton-Lichtkörpers 21 eingegossen.

Diese Ausführung macht deutlich, dass über die Revisionsschächte 39 die Licht-abgebenden Lichtbalken 12 herausgeführt werden können und in eine benachbart dort anstoßende weitere Deckenplatte eingeführt werden können.

Es ist also nicht notwendig, pro Deckenplatte ein einziges Lichtband mit einem einzigen Lichtbalken 12 zu verwenden. Das gezeigte Ausführungsbeispiel zeigt, dass sich der Lichtbalken 12 auch über mehrere Deckenplatten hinweg erstrecken kann. Auch hier wird deutlich, dass die in dem Profilkanal 10 verlegten Lichtbalken 12 aus einzelnen LED-Elementen bestehen, die bevorzugt fluchtend und zentrisch den - bevorzugt bogenförmigen, dem Profil des Kanals angepassten - Licht-aufnehmenden Stirnseiten der Lichtleitelemente 4 im Profilkanal 10 gegenüberliegen und so eine intensive Lichteinstrahlung auf die jeweils Licht aufnehmenden Stirnseiten der Lichtleitelemente 4 erzeugen.

Der Lichtbalken 12 mit den einzelnen LED-Elementen kann sogar in axialer Richtung verschiebbar und feststellbar im Profilkanal 10 angeordnet sein, um eine genaue zentrische Zuordnung der einzelnen LED-Elemente 20 zu den Licht aufnehmenden Stirnseiten der Lichtleitelemente 4 zu gewährleisten.

Die Figur 25 zeigt auch, dass die dreiecksförmige deckenplattenseitige Bewehrung 40 jeweils mit unteren Querstäben 46 verbunden ist, die in das Vergussmaterial der Deckenplatte eingegossen sind und etwa parallel zu den Profilkanälen 10 und im Abstand hierzu in dem Betonkörper verlaufen.

### Zeichnungslegende

- 1: Lichtleitermatte
- 2: Längssteg
- 3: Quersteg
- 4: Lichtleiterelement
- 5: Lichtkanal
- 6: Stirnseite (von 4)
- 7: Seitenfläche
- 8: Bodenseite
- 9: Rastnoppe
- 10: Profilkanal
- 11: Haltestab
- 12: Lichtbalken
- 13: Pfeilrichtung
- 14: Pfeilrichtung
- 15: Pfeilrichtung
- 16: Pfeilrichtung
- 17: Montageschiene
- 18: Basisschenkel
- 19: Seitenschenkel
- 20: LED-Element
- 21: Lichtleitkörper (z. B. Beton)
- 22: Oberseite
- 23: Bodenseite
- 24: Gießmasse
- 25: Bodennut
- 26: Hinterschneidung
- 27: Bodenfläche
- 28: Teilungslinie vertikal
- 29: Teilungslinie horizontal
- 30: Stromzuführung
- 31: Stromanschluss
- 32: Kabelkanal
- 33: Belagsoberfläche (z. B. Straße)
- 34: Stirnseite (von 21)
- 35: Rückseite (von 21)
- 36: Kabelkanal (in 35)
- 37: Stromkabel
- 38: Teilungsebene
- 39: Revisionsschacht
- 40: Bewehrung (von 21)
- 41: Doppelelement (von 21a + 21b)
- 42: Rohdecke
- 43: Tragstab (von 42)
- 44: Bewehrung (von 42)
- 45: Tragstab (von 40)
- 46: Querstab (von 40)

## Patentansprüche

1. Lichtleitermatte (1) für die Herstellung eines block- oder quaderförmigen Lichtleitkörpers (21), die in einer Gussform angeordnet und mit einer gießfähigen, aushärtbaren Gießmasse (24) ausgießbar ist, wobei die Lichtleitermatte (1) mindestens teilweise aus einem lichtleitenden Kunststoff besteht, wobei profilierte Lichtleitelemente (4) aus einem mindestens teilweise lichtleitenden Kunststoff angeformt sind, deren eine Stirnseite (6) als lichtabgebende Flächen an der Oberseite (22) des Lichtleitkörpers (21) ausgebildet sind, wobei in der Lichtleitermatte (1) Lichtkanäle (5) zur Aufnahme von punktförmigen, lichterzeugenden Elementen ausgebildet sind, und dass die Lichtkanäle (5) an der bodennahen Seite der Lichtleitelemente (4) angeformt sind, **dadurch gekennzeichnet, dass** die Lichtleitermatte (1) aus gitterartig miteinander verbundenen Längs- und Querstegen (2, 3) besteht, wobei im Kreuzungspunkt der Längs- und Querstege (2, 3) die profilierten Lichtleitelemente (4) angeformt sind, wobei mindestens die Längsstege (2) der Lichtleitermatte (1) als die Lichtkanäle (5) zur Aufnahme der punktförmigen, lichterzeugenden Elemente ausgebildet sind, wobei die lichterzeugenden Elemente als Lichtbalken (12) aus kettenförmig hintereinander angeordneten und elektrisch leitfähig miteinander verbundenen LED-Elementen (20) gebildet sind, von denen jedes LED-Element (20) gegenüber liegend der Bodenseite des Lichtleitelementes (4) positioniert ist, und die LED-Elemente (20) auf einer Montageschiene (17) befestigt sind oder in einem mindestens teilweise transparenten Kunststoffstreifen eingebettet sind, wobei die Montageschiene (17) oder der Kunststoffstreifen lösbar oder unlösbar im Lichtkanal (5) gehalten ist.

2. Lichtleitermatte nach Anspruch 1, **dadurch gekennzeichnet, dass** die Lichtleitermatte (1) aus einem spritzguß- oder druckgußformbaren Kunststoff besteht und dass die Längs- und Querstege (2, 3), sowie die Lichtleitlemente (4) ein werkstoff-einstückiges Licht-leitendes Kunststoffteil bilden.

3. Lichtleitermatte nach Anspruch 1 oder 2, **dadurch gekennzeichnet, dass** der Lichtleitkanal (5) aus einem zur Bodenseite der Lichtleitermatte (1) geöffneten Profilkanal (10) besteht, in den die lichtaufnehmenden Stirnseiten der in der Vergussmasse (24) eingebetteten Lichtleiterelemente (4) hinein ragen und in dem die lichterzeugenden Lichtbalken (12) angeordnet sind.

4. Lichtleitermatte nach einem der Ansprüche 1 bis 3, **dadurch gekennzeichnet, dass** mindestens die Querstege (3) der Lichtleitermatte (1) randseitig als Haltestäbe (11) verlängert sind, um Niederhalteflächen für in der Gussform angeordnete Niederhaltestempel zu bilden.

5. Lichtleitermatte nach einem der Ansprüche 1 bis 4, **dadurch gekennzeichnet, dass** das Profil (10) des Lichtkanals (5) etwa Dachkant-förmig ausgebildet ist und aus einem U-Profil besteht, dessen Basisschenkel symmetrisch gerundet ist.

6. Quader- oder blockförmiger Lichtleitkörper (21) bestehend aus einer ausgehärteten Gießmasse (24), in welche eine Lichtleitermatte (1) gemäß einem der Ansprüche 1 bis 5 eingebettet ist.

7. Lichtleitkörper nach Anspruch 6, **dadurch gekennzeichnet, dass** in einer Bodenseite (23) des Lichtleitkörpers (21) Ausnehmungen oder ein oder mehrere Bodennuten (25) eingearbeitet sind, in deren lichtleiterkörperseitigen Bodenfläche (27) Bodenseiten (8) der Lichtleitelemente (4) münden, und dass im Bereich der Ausnehmungen oder der ein oder mehreren Bodennuten (25) die lichterzeugenden Elemente angeordnet sind.

8. Lichtleitkörper nach einem der Ansprüche 6 oder 7, **dadurch gekennzeichnet, dass** etwa senkrecht zu den halboffenen bodenseitigen Lichtkanälen (5, 10) ein oder mehrere, bodenseitige, halboffene Kabelkanäle (36) in der Vergußmasse des Lichtleitkörpers (21) eingeformt sind, in denen die Stromkabel (37) zur Energieversorgung der Lichtbalken (12) angeordnet sind.

9. Lichtleitkörper nach einem der Ansprüche 6 bis 8, **dadurch gekennzeichnet, dass** die mit der aushärtenden Vergußmasse (24) hergestellten Lichtleitkörper (21a, 21b) spiegelbildlich längs einer bodenseitigen Teilungsebene (38) miteinander verbunden sind und ein beidseitig leuchtendes Doppelelement (41) bilden.

10. Lichtleitkörper nach einem der Ansprüche 6 bis 9, **dadurch gekennzeichnet, dass** an den plattenförmigen Lichtleitkörper (21; 21a, 21b) eine deckenseitige Bewehrung (40) angeformt ist, und dass an der Vorderseite des Lichtleitkörpers (21; 21a, 21b) ein zur Vorderseite geöffneter Revisionsschacht (39) eingeformt ist über den mindestens die dort eingelegten Stromkabel (37) zugänglich sind.

11. Lichtleitkörper nach einem der Ansprüche 6 bis 10, **dadurch gekennzeichnet, dass** der plattenförmige Lichtleitkörper (21; 21a, 21b) als von einer Rohdecke (42) abgehängte Deckenplatte ausgebildet ist.

12. Lichtleitkörper nach Anspruch 10 oder 11, **dadurch gekennzeichnet, dass** die rückseitige Bewehrung (40) der von der Rohdecke (42) abgehängten Deckenplatte an einer rohdeckenseitigen Bewehrung (44) abgehängt ist.

## Claims

1. Light guide mat (1) for producing a block-shaped or cuboid-shaped light guide body (21) which is arranged in a casting mould and can be cast with a pourable, curable casting composition (24), wherein the light guide mat (1) consists at least partly of a light-guiding plastic, wherein profiled light guide elements (4) made from an at least partly light-guiding plastic are integrally moulded, an end-face side (6) of which are formed as light-releasing surfaces on the upper side (22) of the light guide body (21), wherein light channels (5) for receiving point-like light-generating elements are formed in the light guide mat (1), and in that the light channels (5) are integrally moulded on the side of the light guide elements (4) close to the base, **characterised in that** the light guide mat (1) consists of longitudinal bars and transverse bars (2, 3) connected to one another like a grid, wherein at the point of intersection of the longitudinal bars and transverse bars (2, 3), the profiled light guide elements (4) are integrally moulded, wherein at least the longitudinal bars (2) of the light guide mat (1) are formed as the light channels (5) for receiving the point-like, light-generating elements, wherein the light-generating elements are formed as light bars (12) of LED elements (20) arranged like a chain one behind another and connected to one another to be electrically conductive, of which each LED element (20) is positioned opposite the base side of the light guide element (4), and the LED elements (20) are attached on a mounting rail (17) or are embedded in an at least partly transparent plastic strip, wherein the mounting rail (17) or the plastic strip is mounted in the light channel (5) to be releasable or non-releasable.

2. Light guide mat according to claim 1, **characterised in that** the light guide mat (1) consists of a plastic which is mouldable by injection moulding or pressure casting and **in that** the longitudinal bars and transverse bars (2, 3), as well as the light guide elements (4) form a material-integral light-guiding plastic part.

3. Light guide mat according to claim 1 or 2, **characterised in that** the light guide channel (5) consists of a profile channel (10) opened towards the base side of the light guide mat (1) and into which the light-receiving end-face sides of the light guide elements (4) embedded in the casting composition (24) project and in which the light-generating light bars (12) are arranged.

4. Light guide mat according to one of claims 1 to 3, **characterised in that** at least the transverse bars (3) of the light guide mat (1) are extended on the edge side as holding rods (11) in order to form holding-down surfaces for holding down male moulds arranged in the casting mould.

5. Light guide mat according to one of claims 1 to 4, **characterised in that** the profile (10) of the light channel (5) is formed approximately like a roof and consists of a U-profile, the base limb of which is rounded symmetrically.

6. Cuboid-shaped or block-shaped light guide body (21) consisting of a cured casting composition (24) in which a light guide mat (1) according to one of claims 1 to 5 is embedded.

7. Light guide body according to claim 6, **characterised in that** in a base side (23) of the light guide body (21), recesses or one or more base grooves (25) are incorporated, in the light guide body-side base surface (27) of which, base sides (8) of the light guide elements (4) open, and **in that** the light-generating elements are arranged in the region of the recesses or the one or more base grooves (25).

8. Light guide body according to one of claims 6 or 7, **characterised in that** approximately perpendicularly to the half-open base-side light channels (5, 10), one or more, base-side, half-open cable channels (36) are moulded in the casting composition of the light guide body (21), in which the current cables (37) for energy supply of the light bars (12) are arranged.

9. Light guide body according to one of claims 6 to 8, **characterised in that** the light guide bodies (21a, 21b) produced using the curing casting composition (24) are connected to one another in mirror image along a base-side separating plane (38) and form a double element (41) shining on both sides.

10. Light guide body according to one of claims 6 to 9, **characterised in that** a ceiling-side reinforcement (40) is integrally moulded onto the plate-like light guide body (21; 21a, 21b), and **in that** an inspection shaft (39) opened towards the front side, via which at least the current cables (37) laid there are accessible, is moulded on the front side of the light guide body (21; 21a, 21b).

11. Light guide body according to one of claims 6 to 10, **characterised in that** the plate-like light guide body (21; 21a, 21b) is formed as a ceiling plate suspended from a raw ceiling (42).

12. Light guide body according to claim 10 or 11, **characterised in that** the rear-side reinforcement (40) of the ceiling plate suspended from the raw ceiling (42) is suspended on a raw ceiling-side reinforcement (44).

## Revendications

1. Mat conducteur de lumière (1) pour la fabrication d'un corps conducteur de lumière en forme de bloc ou de parallélépipède (21) qui est disposé dans un moule de coulée et apte à être enrobé d'une masse de coulée (24) apte à être coulée et durcissable, dans lequel le mat conducteur de lumière (1) se compose au moins en partie d'une matière plastique conductrice de lumière, dans lequel on rapporte des éléments conducteurs de lumière profilés (4) formés d'une matière plastique au moins partiellement conductrice de lumière, dont un côté frontal (6) est formée comme une surface émettrice de lumière sur le côté supérieur (22) du corps conducteur de lumière (21), dans lequel il est prévu, formés dans le mat conducteur de lumière (1), des conduits de lumière (5) pour recevoir des éléments générateurs de lumière en forme de point, et en ce que les conduits de lumière (5) sont rapportés sur le côté des éléments conducteurs de lumière (4) proche du sol, **caractérisé en ce que** le mat conducteur de lumière (1) se compose de bandes longitudinales et transversales (2, 3) reliées à la manière d'un treillis, dans lequel les éléments conducteurs de lumière profilés (4) sont rapportés à l'intersection des bandes longitudinales et transversales (2, 3), dans lequel c'est au moins les bandes longitudinales (2) du mat conducteur de lumière (1) qui sont formées comme conduits de lumière (5) pour recevoir les éléments générateurs de lumière en forme de points, dans lequel les éléments générateurs de lumière sont formés comme des barres lumineuses (12) composées d'éléments à LED (20) disposés en chaîne les uns derrière les autres et reliés entre eux de manière conductrice d'électricité, parmi lesquels chaque élément à LED (20) est positionné en face du côté sol de l'élément conducteur de lumière (4), et les éléments à LED (20) sont fixés sur un rail de montage (17) ou sont intégrés dans un bandeau de matière plastique au moins en partie transparent, dans lequel le rail de montage (17) ou le bandeau de matière plastique est tenu de manière amovible ou non amovible dans le conduit de lumière (5).

2. Mat conducteur de lumière selon la revendication 1, **caractérisé en ce que** le mat conducteur de lumière (1) se compose d'une matière plastique moulable par injection ou par pression, et **en ce que** les bandes longitudinales et transversales (2, 3) ainsi que les éléments conducteurs de lumière (4) forment un élément en matière plastique conductrice de lumière d'un seul tenant.

3. Mat conducteur de lumière selon la revendication 1 ou 2, **caractérisé en ce que** le conduit de lumière (5) se compose d'un conduit profilé (10) ouvert vers le côté sol du mat conducteur de lumière (1) dans lequel dépassent les côtés frontaux recevant la lumière des éléments conducteurs de lumière (4) intégrés dans la masse de coulée (24) et dans lequel sont disposées les barres lumineuses génératrices de lumière (12).

4. Mat conducteur de lumière selon l'une des revendications 1 à 3, **caractérisé en ce qu'**au moins les bandes transversales (3) du mat conducteur de lumière (1) sont prolongées du côté du bord sous la forme de barres de retenue (11) afin de former des surfaces d'abaissement pour des abaisseurs disposés dans le moule de coulée.

5. Mat conducteur de lumière selon l'une des revendications 1 à 4, **caractérisé en ce que** le profilé (10) du conduit de lumière (5) est à peu près en forme de toit et se compose d'un profilé en U dont la branche de base est arrondie symétriquement.

6. Corps conducteur de lumière en forme de parallélépipède ou de bloc (2) composé d'une masse de coulée (24) durcie dans laquelle est intégré un mat conducteur de lumière (1) selon l'une des revendications 1 à 5.

7. Corps conducteur de lumière selon la revendication 6, **caractérisé en ce que** dans un côté sol (23) du corps conducteur de lumière (21) sont réalisés des creux ou une ou plusieurs rainures de sol (25) dans lesquels débouchent, sur leur surface de sol (27) située côté corps conducteur de lumière, des côtés sol (8) des éléments conducteurs de lumière (4), et **en ce que** dans la zone des creux ou de la ou des rainures de sol (25) sont disposés les éléments générateurs de lumière.

8. Corps conducteur de lumière selon l'une des revendications 6 ou 7, **caractérisé en ce qu'**à peu près perpendiculairement aux conduits de lumière semi-ouverts (5, 10) situés côté sol sont formés un ou plusieurs conduits pour câble semi-ouverts situés côté sol (36), dans la masse de coulée du corps conducteur de lumière (21), dans lesquels sont disposés les câbles électriques (37) pour l'alimentation en énergie des barres lumineuses (12).

9. Corps conducteur de lumière selon l'une des revendications 6 à 8, **caractérisé en ce que** les corps conducteurs de lumière (21a, 21b) fabriqués avec la masse de coulée durcissable (24) sont reliés en miroir le long d'un plan de séparation situé côté sol (38) et forment un élément double (41) lumineux des deux côtés.

10. Corps conducteur de lumière selon l'une des revendications 6 à 9, **caractérisé en ce que** sur le corps conducteur de lumière en forme de plaque (21 ; 21a, 21b) est rapportée une armature située côté plafond (40), et **en ce que** sur le côté avant du corps conducteur de lumière (21 ; 21a, 21b) est formée une gaine de révision (39) ouverte vers le côté avant, par laquelle au moins les câbles électriques (37) posés à cet endroit sont accessibles.

11. Corps conducteur de lumière selon l'une des revendications 6 à 10, **caractérisé en ce que** le corps conducteur en forme de plaque (21 ; 21a, 21b) est formé comme une plaque de plafond suspendue à un plafond brut (42).

12. Corps conducteur de lumière selon la revendication 10 ou 11, **caractérisé en ce que** l'armature située côté arrière (40) de la plaque de plafond suspendue au plafond brut (42) est suspendue à une armature située côté plafond brut (44).
